# EUROPÄISCHE PATENTSCHRIFT

(11) **EP 4 129 937 B1**
(45) Veröffentlichungstag und Bekanntmachung des Hinweises auf die Patenterteilung: **21.08.2024**
(21) Anmeldenummer: 22191620.8
(22) Anmeldetag: 10.08.2018
(51) Int. Cl.: G02B 6/36, G01K 11/32, G02B 6/24, C03B 23/207, G01K 11/3206

(54) **BEFESTIGUNGSVORRICHTUNG UND VERWENDUNG EINER BEFESTIGUNGSVORRICHTUNG**
FASTENING DEVICE AND USE OF A FASTENING DEVICE
DISPOSITIF DE FIXATION ET UTILISATION D'UN DISPOSITIF DE FIXATION

(30) Priorität: 31.08.2017 DE 102017120062
(43) Veröffentlichungstag der Anmeldung: 08.02.2023
(62) Teilanmeldung aus: 18753408.6
(73) Patentinhaber: VC VIII Polytech Holding ApS, 6740 Bramming (DK)
(72) Erfinder: Möller, Tobias, 82319 Starnberg (DE); Kienitz, Sascha, 81547 München (DE)
(74) Vertreter: Zacco Denmark A/S

(56) Entgegenhaltungen:
- EP-A2- 1 144 969
- EP-A2- 1 145 059
- US-A- 4 902 323
- US-A1- 2003 202 763
- US-A1- 2015 055 923

## Beschreibung

### TECHNISCHES GEBIET

Ausführungsformen der Offenbarung betreffen eine Befestigungsvorrichtung und eine Verwendung einer Befestigungsvorrichtung.

Ein in einen Lichtwellenleiter integriertes Faser-Bragg-Gitter ist als Temperatursensor verwendbar. Eine thermisch bedingte Längenänderung des Faser-Bragg-Gitters bewirkt eine Verschiebung des spektralen Reflexionsmaximums des Gitters. Durch Beaufschlagung des Gitters mit Licht und einem Auswerten des Reflexionsmaximums kann auf die Temperatur des Gitters zurückgeschlossen werden.

### STAND DER TECHNIK

Neben der zur Temperaturmessung erwünschten Temperaturempfindlichkeit ist ein Faser-Bragg-Gitter-Sensor auch empfindlich gegenüber anderweitigen mechanischen Dehnungen und Stauchungen in Form von externen Störungen. Diese Empfindlichkeit gegenüber den externen Störungen muss mechanisch entkoppelt werden. Eine Möglichkeit besteht darin, den Bereich des Lichtwellenleiters, in dem das Faser-Bragg-Gitter ausgebildet ist, mit einer Kapillare zu umgeben und diese Kapillare mechanisch an dem Lichtwellenleiter zu befestigen.

Es ist bekannt, einen Klebstoff zum Befestigen der Kapillare am Lichtwellenleiter zu verwenden. Die Faser wird in die Kapillare eingeklebt, was sich allerdings nachteilig auf die Temperaturempfindlichkeit auswirken kann. Ferner kann die Verklebung bis zum Faser-Bragg-Gitter vorkriechen und diesen Bereich verkleben, was zu einem Funktionsausfall führen kann.

Des Weiteren sind Verfahren zum mechanischen Befestigen einer Kapillare an einem Bereich eines Lichtwellenleiters bekannt, bei welchen der optische Pfad des Lichtwellenleiters direkt mit einer Fused-Silica-Kapillare verspleißt wird. Die US 2002/0009279 A1 offenbart eine optische Einmodenfaser mit einem Faser-Bragg-Gitter, wobei eine Hülse durch Wärmebehandlung mit einem Bereich der Faser verbunden wird, in welchem der Außendurchmesser der Faser vergrößert ist.

Hierdurch kommt es zu einer starken und unerwünschten Signaldämpfung und damit zu einer Verschlechterung der Messsignale. Es ist eine Lösung wünschenswert, bei welcher die Zuverlässigkeit einer mechanischen Verbindung zwischen einem Lichtwellenleiter und einer Kapillare gewährleistet ist, bei gleichzeitig guter Temperaturempfindlichkeit und/oder niedriger Signaldämpfung.

EP 1 144 969 A2 und EP 1 145 059 A2 beziehen sich jeweils auf das Befestigen einer Kapillare an einer optischen Faser mit Bragg-Gittern, wobei die Kapillaren jeweils durch Verschmelzen mit den Fasern verbunden werden. In ersterem Dokument dient das Bragg-Gitter als Temperatursensorelement. US 4 902 323 A offenbart einen Koppler zum Verbinden zweier Glasfasern. Dazu wird eine Kapillare über die Glasfasern geschoben, in der Mitte erhitzt und dann auseinandergezogen, wobei die Kapillare an den Glasfasern befestigt wird. Eine Markierung auf der Oberfläche der Kapillare erlaubt, selbige so zu orientieren, dass die Glasfasern im Bezug auf die Apparatur, die zum Erhitzen und Auseinanderziehen verwendet wird, immer gleich angeordnet sind. US 2003/202763 A1 bezieht sich auf eine optische Faser, die mit einer karbonisierten Polymerschicht beschichtet ist. Der Ort eines Fasergitters kann dabei vor dem Beschichten markiert werden, so dass er später identifiziert werden kann. US 2015/055923 A1 bezieht sich auf das Spleißen zweier Mehrkernglasfasern. Damit die verschiedenen Kerne miteinander verbunden werden können, müssen ihre jeweiligen Positionen vor dem Spleißen miteinander in Übereinstimmung gebracht werden. Dazu werden kleine Markierungen im Glasfasermantel (Cladding) angebracht, die von einem Detektor erkannt werden können.

### ZUSAMMENFASSUNG DER OFFENBARUNG

Die Erfindung bezieht sich auf eine Befestigungsvorrichtung mit den Merkmalen des Anspruchs 1, sowie auf eine Verwendung der erfindungsgemäßen Befestigungsvorrichtung zur Durchführung eines hierin offenbarten Verfahrens nach Anspruch 2.

Es wird ein Befestigungsverfahren angegeben, das Folgendes umfasst: Bereitstellen eines Lichtwellenleiters aus einem Material mit einer ersten Schmelztemperatur, wobei ein Sensorbereich des Lichtwellenleiters mindestens ein integriertes Temperatursensorelement umfasst; Bereitstellen einer Kapillare aus einem Material mit einer zweiten Schmelztemperatur, derart, dass die Kapillare den Sensorbereich des Lichtwellenleiters zumindest bereichsweise umgibt und dass sich ein Befestigungsbereich der Kapillare beabstandet von dem Sensorbereich befindet, wobei die zweite Schmelztemperatur niedriger als die erste Schmelztemperatur ist, wobei das Temperatursensorelement in einem Endbereich des Lichtwellenleiters angeordnet ist und der Endbereich in die Kapillare eingeführt ist, so dass ein Ende der Kapillare freiliegt; Befestigen des Befestigungsbereichs der Kapillare am Lichtwellenleiter, umfassend ein Erwärmen des Befestigungsbereichs der Kapillare auf eine Erwärmungstemperatur, die gleich groß wie oder größer als die zweite Schmelztemperatur ist; und Erwärmen des freiliegenden Endes der Kapillare auf eine Erwärmungstemperatur, die gleich groß wie oder größer als die zweite Schmelztemperatur ist.

Die erfindungsgemäße Befestigungsvorrichtung weist Folgendes auf: Einen Einführungsbereich für eine Kapillare, die einen Sensorbereich eines Lichtwellenleiters zumindest bereichsweise umgibt, wobei die Kapillare einen Befestigungsbereich umfasst, der beabstandet von dem Sensorbereich des Lichtwellenleiters anordenbar ist; einen Detektor, der dazu konfiguriert ist, eine Markierung an der Kapillare zu detektieren, die an der Kapillare bereitgestellt ist, um den Befestigungsbereich der Kapillare anzuzeigen; und einen Erwärmungsbereich, der dazu konfiguriert ist, den Befestigungsbereich der Kapillare zu erwärmen, vorzugsweise für eine vorbestimmte Zeitdauer automatisch zu erwärmen, wenn der Detektor den Befestigungsbereich detektiert.

Erfindungsgemäß wird die hierin beschriebene Befestigungsvorrichtung zum Durchführen des hierin beschriebenen Befestigungsverfahrens verwendet.

Dadurch kann ein Temperatursensor erhalten werden, in dem ein hierin beschriebenes Befestigungsverfahren durchgeführt wird. Zur Durchführung des Befestigungsverfahrens kann wiederum eine hierin beschriebene Befestigungsvorrichtung verwendet werden. Der erhaltene Temperatursensor weist einen Lichtwellenleiter auf, der seinerseits wiederum ein integriertes Temperatursensorelement aufweist.

Ein Temperatursensorelement, das entlang der Axialrichtung in einen Lichtwellenleiter integriert ist, ist typischerweise ein Faser-Bragg-Gitter. Ein Faser-Bragg-Gitter ist ein optisches Interferenzfilter, das Licht mit einer bestimmten Wellenlänge bzw. Licht, das in einem bestimmten Wellenlängenbereich liegt, reflektiert. Die bestimmte Wellenlänge bzw. der bestimmte Wellenlängenbereich wird über eine Ausdehnung bzw. Stauchung des Faser-Bragg-Gitters in Axialrichtung des Lichtwellenleiters beeinflusst. Auf das Faser-Bragg-Gitter auftreffendes Messlicht wird am Gitter in Abhängigkeit von seiner Wellenlänge reflektiert, bzw. es werden nur Wellenlängenanteile des Messlichts vom Gitter reflektiert, die innerhalb einer Reflexionsbandbreite des Gitters liegen. Die Wellenlängenabhängigkeit ist durch die Ausdehnung bzw. Stauchung beeinflussbar.

Um vorwiegend eine temperaturinduzierte Ausdehnung bzw. Stauchung des Bereichs des Lichtwellenleiters zu messen, der das Faser-Bragg-Gitter enthält, wird dieser Bereich (nachfolgend als Sensorbereich bezeichnet) des Lichtwellenleiters durch das hierin beschriebene Verfahren mechanisch entkoppelt.

Dadurch, dass nur die Kapillare geschmolzen wird, wird der optische Pfad des Lichtwellenleiters nicht oder nicht nennenswert beeinflusst, und es ergibt sich im Wesentlichen keine zusätzliche Signaldämpfung durch das Befestigungsverfahren.

Dadurch, dass das freiliegende Ende der Kapillare auf eine Erwärmungstemperatur erwärmt wird, die gleich groß wie oder größer ist als die zweite Schmelzemperatur, ist auch das Ende, das dem Befestigungsbereich gegenüberliegt, entsprechend abgedichtet, so dass ein Eindringen von Fremdmaterial in den Innenraum der Kapillare vermieden werden kann.

Das Verfahren ist zudem klebstofffrei. Dadurch kann eine Beeinflussung des Temperaturverhaltens durch Klebstoff, der in herkömmlichen Verfahren zum Einsatz kommt, vermieden werden. Außerdem kann die Betriebstemperatur auch oberhalb eines Bereichs liegen, in welchem herkömmlich zum Befestigen verwendeter Klebstoff nicht einsatzfähig wäre. Durch die Abwesenheit von Klebstoff kann dieser nicht in den Bereich des Temperatursensorelements kriechen und dieses beeinträchtigen.

Die Verbindung zwischen der Kapillare und dem Lichtwellenleiter erfolgt verfahrensgemäß durch einen Spleißvorgang. Durch das gezielte Schmelzen der Kapillare im Befestigungsbereich verändert der Befestigungsbereich der Kapillare zumindest abschnittsweise seinen Innendurchmesser. Der Befestigungsbereich kommt mit dem Lichtwellenleiter in mechanischen Kontakt und hält diesen durch Reibung in Position. Dadurch, dass der Befestigungsbereich von dem Sensorbereich des Lichtwellenleiters beabstandet ist, wird der Sensorbereich im Wesentlichen nicht beeinflusst. Es ergibt sich eine klebstofffreie und dichte Verbindung.

Beispielsweise wird zum Durchführen des Verfahrens ein Spleißgerät dazu verwendet, die definierte Stelle an der Kapillare, die dem Befestigungsbereich entspricht, auf die Erwärmungstemperatur zu erwärmen. Dadurch schmilzt (lediglich) die Kapillare und härtet anschließend im verformten Zustand wieder aus, in welchem sie einen mechanischen Kontakt mit dem Lichtwellenleiter hat. Der optische Pfad des Lichtwellenleiters wird dadurch nicht oder nicht nennenswert beeinträchtigt.

Ein nicht-einschränkendes Beispiel für das Material der Kapillare ist Borosilikat. Ein nicht-einschränkendes Beispiel für das Material des Lichtwellenleiters ist Glasfaser (Siliciumdioxid). Die erste Schmelztemperatur, d. h. diejenige des Lichtwellenleiters, liegt dann bei ca. 1000 °C. Die zweite Schmelztemperatur, d. h. diejenige der Kapillare, liegt dann bei ca. 700 °C.

Bei Ausführungsformen ist die Erwärmungstemperatur kleiner als die erste Schmelztemperatur. Dadurch kann auf einfache Weise sichergestellt werden, dass das Material des Lichtwellenleiters während des Befestigungsvorgangs im ungeschmolzenen Zustand verbleibt und damit der optische Pfad nicht beeinträchtigt wird. Die Erwärmungstemperatur, die gemäß der Ausführungsform kleiner ist als die erste Schmelztemperatur, ist zumindest die Erwärmungstemperatur, mit welcher der Befestigungsbereich der Kapillare erwärmt wird. Zusätzlich kann auch die Erwärmungstemperatur, die gemäß der Ausführungsform kleiner ist als die erste Schmelztemperatur, die Erwärmungstemperatur sein, mit welcher das freiliegende Ende der Kapillare erwärmt wird.

Bei Ausführungsformen umfasst das Befestigen weiter ein Erwärmen des Befestigungsbereichs auf die Erwärmungstemperatur während eines Zeitraums mit einer vorbestimmten Dauer; und ein anschließendes Erkaltenlassen des Befestigungsbereichs. Dadurch kann gewährleistet werden, dass die Kapillare sicher mit dem Lichtwellenleiter verbunden wird, und dass nach dem Abschluss des Befestigungsvorgangs die Kapillare sicher in ihrer Position verbleibt.

Es ist auch möglich, dass die Erwärmungstemperatur gleich groß wie oder größer als die erste Schmelztemperatur gewählt wird. Gemäß diesem Aspekt erfolgt das Erwärmen des Befestigungsbereichs der Kapillare auf die Erwärmungstemperatur während eines Zeitraums mit einer vorbestimmten Dauer, wobei die vorbestimmte Dauer des Zeitraums so gewählt ist, dass sich das Material des Lichtwellenleiters während des Befestigens auf eine Temperatur erwärmt, die kleiner als die erste Schmelztemperatur ist. Anschließend wird der Befestigungsbereich erkalten gelassen.

Durch die Wahl der Zeitdauer wird gemäß diesem Aspekt gewährleistet, dass sich die Wärme nicht derart bis zum Lichtwellenleiter ausbreiten kann, dass dieser schmilzt. Gemäß diesem Aspekt kann ein zügigerer Befestigungsvorgang erzielt werden.

Bei Ausführungsformen umfasst das Befestigen weiter ein zeitweises Fixieren des Befestigungsbereichs vor dem Erwärmen, und zwar relativ zumindest zu der Axialrichtung des Lichtwellenleiters. nach dem Erkaltenlassen wird die Fixierung gelöst.

Dadurch kann gewährleistet werden, dass sich die Kapillare entlang der Achse des Lichtwellenleiters nicht verschiebt, bevor sie durch das Erkalten reibschlüssig mit diesem Verbunden ist, so dass die optischen Eigenschaften des Lichtwellenleiters nicht durch eine ungewollte Verschiebung der Kapillare beeinträchtigt werden.

Bei Ausführungsformen ist die vorbestimmte Zeitdauer mindestens so lang, dass bei gegebenem Durchmesser, gegebener Materialstärke und gegebener Ausdehnung des Befestigungsbereichs in Axialrichtung das Material der Kapillare im Befestigungsbereich schmilzt. Die vorbestimmte Zeitdauer ist zudem maximal so lang, dass das Material des Lichtwellenleiters im ungeschmolzenen Zustand verbleibt.

Dadurch kann gewährleistet werden, dass die Verbindung zwischen dem Befestigungsbereich der Kapillare und dem Lichtwellenleiter sicher und zuverlässig erfolgt.

Bei Ausführungsformen ist die vorbestimmte Zeitdauer maximal so lang, dass ein Bereich der Kapillare, der den Sensorbereich des Lichtwellenleiters umgibt, im ungeschmolzenen Zustand verbleibt.

Dadurch kann gewährleistet werden, dass der Sensorbereich des Lichtwellenleiters bzw. das dort enthaltene Temperatursensorelement weitgehend unbeeinflusst von geschmolzenem Kapillarmaterial bleibt, so dass die optischen Eigenschaften nicht beeinträchtigt werden.

Bei Ausführungsformen ist der Befestigungsbereich der Kapillare um eine Achse der Kapillare umlaufend bereitgestellt, und der Befestigungsbereich liegt nach dem Befestigen umlaufend reibschlüssig an der Umfangsfläche des Lichtwellenleiters an. Alternativ oder zusätzlich liegt der Befestigungsbereich gemäß diesem Aspekt umlaufend abdichtend an der Umfangsfläche des Lichtwellenleiters an.

Durch einen umlaufend gewährleisteten Reibschluss kann die Kapillare sicher am Lichtwellenleiter fixiert werden. Eine umlaufende Abdichtung kann dazu beitragen, ein Eindringen von Fremdmaterial in den Innenraum der Kapillare zu vermeiden.

Bei Ausführungsformen weist der Befestigungsbereich der Kapillare mindestens eine axiale Ausdehnung, die geeignet ist, um nach dem Befestigen einer vorbestimmten Kraft in Axialrichtung zwischen der Kapillare und dem Lichtwellenleiter zu widerstehen.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:
Fig. 1 eine schematische Darstellung eines Lichtwellenleiters und einer Kapillare zur Erläuterung eines Befestigungsverfahrens.
Fig. 2 eine schematische Darstellung des Lichtwellenleiters und der Kapillare aus Fig. 1 an einer Befestigungsvorrichtung, die zum Durchführen eines Befestigungsverfahrens geeignet ist;
Fig. 3 ein Ablaufdiagramm eines Befestigungsverfahrens.

Nachstehend werden Ausführungsformen der Erfindung näher erläutert. Die Zeichnungen dienen der Veranschaulichung eines oder mehrerer Beispiele von Ausführungsformen der Erfindung.

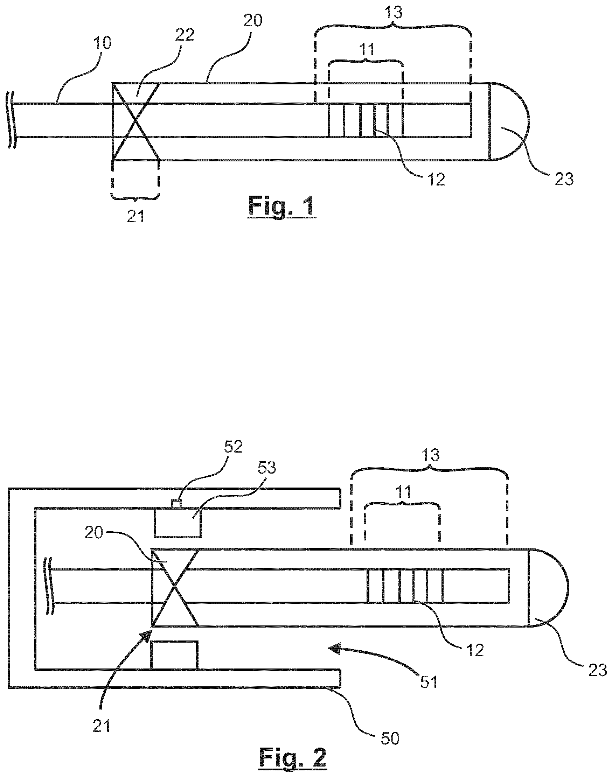

Fig. 1 zeigt eine schematische Darstellung eines Lichtwellenleiters 10 mit einem endseitig angeordneten Sensorbereich 11. Im Sensorbereich 11, der in einem Endbereich 13 des Lichtwellenleiters 10 vorgesehen ist, ist als ein Temperatursensorelement 12 beispielhaft ein Faser-Bragg-Gitter ausgebildet. Der Lichtwellenleiter 10 der Ausführungsform ist als nicht-einschränkendes Beispiel aus SiO2 mit einer ersten Schmelztemperatur von ca. 1000 °C ausgebildet.

Eine Kapillare 20, die ist als nicht-einschränkendes Beispiel aus Borosilikat mit einer zweiten Schmelztemperatur von ca. 700 °C ausgebildet ist, umgibt den Sensorbereich 11 des Lichtwellenleiters 10 umlaufend. Die Kapillare 20 erstreckt sich in einer Axialrichtung des Lichtwellenleiters 10 vom Endbereich 13 weg und weist in einem Abschnitt, der sich in einem gewissen Abstand vom Sensorbereich 11 des Lichtwellenleiters 10 befindet, einen Befestigungsbereich 21 auf. Am Befestigungsbereich 21 ist eine Markierung 22 angebracht. Die Markierung 22 kann optisch sein, sie kann aber auch alternativ oder zusätzlich maschinendetektierbar sein, beispielsweise magnetisch oder dergleichen.

Fig. 2 zeigt den Lichtwellenleiter 10 mit der Kapillare 20 an einer schematisch dargestellten Befestigungsvorrichtung 50, die zur Durchführung des Verfahrens verwendet werden kann. Die Befestigungsvorrichtung 50 umfasst einen Einführungsbereich 51 für die Kapillare 20, einen Detektor 52, der dazu konfiguriert ist, die Markierung 22 an der Kapillare 20 zu detektieren, sowie einen Erwärmungsbereich 53, der dazu konfiguriert ist, den Befestigungsbereich 21 der Kapillare 20 zu erwärmen, wenn der Detektor 52 die Markierung 22 detektiert hat und ggf. ihre Position bestimmt hat.

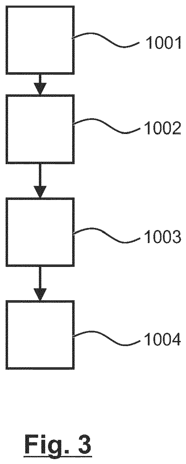

Das Verfahren wird anhand eines Ablaufdiagramms aus Fig. 3 unter weiterer Bezugnahme auf die Fig. 1 und 2 erläutert.

In 1001 wird der Lichtwellenleiter 10 bereitgestellt. Der Lichtwellenleiter 10 ist aus einem Material ausgebildet, das eine erste Schmelztemperatur hat. Ein Sensorbereich des Lichtwellenleiters 10 umfasst das Faser-Bragg-Gitter als ein integriertes Temperatursensorelement 12.

In 1002 wird die Kapillare 20 so bereitgestellt, dass die Kapillare 20 den Sensorbereich 11 des Lichtwellenleiters 10 zumindest bereichsweise umgibt und dass sich der Befestigungsbereich 21 der Kapillare 20 axial beabstandet von dem Sensorbereich 11 befindet. Die Kapillare 20 hat eine zweite Schmelztemperatur, die niedriger als die erste Schmelztemperatur des Lichtwellenleiters 10 ist.

In 1003 wird der Befestigungsbereich 21 der Kapillare 20 am Lichtwellenleiter 10 befestigt. Beim Befestigen wird der Befestigungsbereich 21 der Kapillare 20 auf eine Erwärmungstemperatur erwärmt. Die Erwärmungstemperatur ist gleich groß wie oder größer als die zweite Schmelztemperatur. Das Erwärmen erfolgt beispielsweise mit dem Erwärmungsbereich 53 der Befestigungsvorrichtung 50.

Bei der Ausführungsform wird in 1004 außerdem ein freiliegendes Ende 23 der Kapillare auf eine Erwärmungstemperatur erwärmt, die gleich groß wie oder größer als die zweite Schmelztemperatur ist. Das Erwärmen des freiliegenden Endes 23 kann ebenfalls mit dem Erwärmungsbereich 53 der Befestigungsvorrichtung 50 erfolgen. Es kann eine weitere Markierung (nicht dargestellt) am freiliegenden Ende 23 der Kapillare 20 bereitgestellt sein, die der Detektor 52 detektiert und ggf. nach einer entsprechenden Positionsbestimmung den Erwärmungsbereich 53 veranlasst, im Bereich der weiteren Markierung das freiliegende Ende 23 zu erwärmen. Es kann auch vorgesehen sein, dass der Detektor 52 das Ende der Kapillare 20 (das freiliegende Ende 23) markierungslos detektiert und dort den Erwärmungsbereich 53 veranlasst, das freiliegende Ende 23 zu erwärmen. Es kann auch vorgesehen sein, dass das freiliegende Ende 23 ohne eine Detektion erwärmt wird, beispielsweise durch eine von extern vorgenommene Positionierung des Erwärmungsbereichs 53.

Dadurch wird ein Temperatursensor erhalten, dessen Temperatursensorelement 12 von unerwünschten mechanischen Einflüssen mittels der Kapillare 20 weitgehend entkoppelt ist. Die Kapillare 20 ist klebstofffrei zuverlässig mit ihrem Befestigungsbereich 21 mittels Reibung mit dem Lichtwellenleiter 10 verbunden und umlaufend abgedichtet. Am freiliegenden Ende 23 ist außerdem die Dichtigkeit durch den Erwärmungsvorgang gewährleistet.

## Patentansprüche

1. Befestigungsvorrichtung (50), umfassend:
einen Einführungsbereich (51) für eine Kapillare (20), die einen Sensorbereich (11) eines Lichtwellenleiters (10) zumindest bereichsweise umgibt, wobei die Kapillare (20) einen Befestigungsbereich (21) umfasst, der beabstandet von dem Sensorbereich (11) des Lichtwellenleiters (10) anordenbar ist;
einen Detektor (52), der dazu konfiguriert ist, eine Markierung (22) an der Kapillare (20) zu detektieren, die an der Kapillare (20) bereitgestellt ist, um den Befestigungsbereich (21) der Kapillare (20) anzuzeigen;
einen Erwärmungsbereich (53), der dazu konfiguriert ist, den Befestigungsbereich (21) der Kapillare (20) zu erwärmen, vorzugsweise automatisch für eine vorbestimmte Zeitdauer zu erwärmen, wenn der Detektor (52) die Markierung (22) detektiert.

2. Verwendung der Befestigungsvorrichtung (50) nach Anspruch 1 zur Durchführung eines Befestigungsverfahrens, umfassend:
Bereitstellen (1001) des Lichtwellenleiters (10) aus einem Material mit einer ersten Schmelztemperatur, wobei der Sensorbereich (11) des Lichtwellenleiters mindestens ein integriertes Temperatursensorelement (12) umfasst;
Bereitstellen (1002) der Kapillare (20) aus einem Material mit einer zweiten Schmelztemperatur, derart, dass die Kapillare (20) den Sensorbereich (11) des Lichtwellenleiters (10) zumindest bereichsweise umgibt und dass sich der Befestigungsbereich (21) der Kapillare beabstandet von dem Sensorbereich (11) befindet, wobei die zweite Schmelztemperatur niedriger als die erste Schmelztemperatur ist, wobei das Temperatursensorelement (12) in einem Endbereich (13) des Lichtwellenleiters angeordnet ist und der Endbereich in die Kapillare (20) eingeführt ist, so dass ein Ende (23) der Kapillare (20) freiliegt;
Befestigen (1003) des Befestigungsbereichs der Kapillare (20) am Lichtwellenleiter (10), umfassend ein Erwärmen des Befestigungsbereichs der Kapillare (20) auf eine Erwärmungstemperatur, die gleich groß wie oder größer als die zweite Schmelztemperatur ist;
Erwärmen (1004) des freiliegenden Endes (23) der Kapillare (20) auf eine Erwärmungstemperatur, die gleich groß wie oder größer als die zweite Schmelztemperatur ist.

3. Verwendung nach Anspruch 2, wobei die Erwärmungstemperatur kleiner als die erste Schmelztemperatur ist.

4. Verwendung nach Anspruch 2 oder 3, wobei das Befestigen umfasst:
Erwärmen des Befestigungsbereichs (21) auf die Erwärmungstemperatur für eine vorbestimmte Zeitdauer; und
Erkaltenlassen des Befestigungsbereichs (21).

5. Verwendung nach Anspruch 2, wobei das Befestigen umfasst:
Erwärmen des Befestigungsbereichs (21) auf die Erwärmungstemperatur, wobei die Erwärmungstemperatur gleich groß wie oder größer als die erste Schmelztemperatur ist, für eine vorbestimmte Zeitdauer, wobei die vorbestimmte Zeitdauer so gewählt ist, dass sich das Material des Lichtwellenleiters (10) während des Befestigens auf eine Temperatur erwärmt, die kleiner als die erste Schmelztemperatur ist; und
Erkaltenlassen des Befestigungsbereichs.

6. Verwendung nach Anspruch 4 oder 5, wobei das Befestigen ferner umfasst:
zeitweises Fixieren des Befestigungsbereichs (21) relativ zumindest zur Axialrichtung des Lichtwellenleiters (10) vor dem Erwärmen; und
Lösen der Fixierung nach dem Erkaltenlassen.

7. Verwendung nach einem der Ansprüche 4 bis 6,
wobei die vorbestimmte Zeitdauer mindestens so lang ist, dass bei gegebenem Durchmesser, gegebener Materialstärke und gegebener Ausdehnung des Befestigungsbereichs in Axialrichtung das Material der Kapillare (20) im Befestigungsbereich (21) schmilzt, und wobei die vorbestimmte Zeitdauer maximal so lang ist, dass das Material des Lichtwellenleiters (10) im ungeschmolzenen Zustand verbleibt.

8. Verwendung nach einem der Ansprüche 4 bis 7,
wobei die vorbestimmte Zeitdauer maximal so lang ist, dass ein Bereich der Kapillare (20), der den Sensorbereich (11) des Lichtwellenleiters umgibt, im ungeschmolzenen Zustand verbleibt.

9. Verwendung nach einem der Ansprüche 2 bis 8,
wobei der Befestigungsbereich (21) der Kapillare (20) um eine Achse der Kapillare (20) umlaufend bereitgestellt ist, und wobei der Befestigungsbereich (21) nach dem Befestigen umlaufend reibschlüssig und/oder umlaufend abdichtend an der Umfangsfläche des Lichtwellenleiters (10) anliegt.

10. Verwendung nach einem der Ansprüche 2 bis 9,
wobei der Befestigungsbereich der Kapillare (20) mindestens eine axiale Ausdehnung aufweist, die geeignet ist, um nach dem Befestigen einer vorbestimmten Kraft in Axialrichtung zwischen der Kapillare (20) und dem Lichtwellenleiter (10) zu widerstehen.

## Claims

1. A fastening device (50), comprising:
an insertion region (51) for a capillary (20) which at least partially surrounds a sensor region (11) of an optical waveguide (10), the capillary (20) comprising a fastening region (21) which is arrangeable spaced apart from the sensor region (11) of the optical waveguide (10);
a detector (52) configured to detect a marker (22) on the capillary (20) provided on the capillary (20) to indicate the fastening region (21) of the capillary (20);
a heating region (53) configured to heat the fastening region (21) of the capillary (20), preferably automatically, for a predetermined period of time when the detector (52) detects the marker (22).

2. A use of the fastening device (50) according to claim 1 for carrying out a fastening method, comprising:
providing (1001) the optical waveguide (10) from a material having a first melting temperature, the sensor region (11) of the optical waveguide comprising at least one integrated temperature sensor element (12);
providing (1002) the capillary (20) from a material having a second melting temperature such that the capillary (20) at least partially surrounds the sensor region (11) of the optical waveguide (10) and that the fastening region (21) of the capillary is located spaced apart from the sensor region (11), the second melting temperature being lower than the first melting temperature, the temperature sensor element (12) being arranged in an end region (13) of the optical waveguide, and the end region being inserted into the capillary (20) so that one end (23) of the capillary (20) is exposed;
fastening (1003) the fastening region of the capillary (20) to the optical waveguide (10), comprising heating the fastening region of the capillary (20) to a heating temperature equal to or greater than the second melting temperature;
heating (1004) the exposed end (23) of the capillary (20) to a heating temperature equal to or greater than the second melting temperature.

3. The use according to claim 2, wherein the heating temperature is less than the first melting temperature.

4. The use according to claim 2 or 3, wherein the fastening comprises:
heating the fastening region (21) to the heating temperature for a predetermined period of time; and
allowing the fastening region (21) to cool down.

5. The use according to claim 2, wherein the fastening comprises:
heating the fastening region (21) to the heating temperature, the heating temperature being equal to or greater than the first melting temperature, for a predetermined period of time, the predetermined period of time being chosen such that, during fastening, the material of the optical waveguide (10) is heated to a temperature less than the first melting temperature; and
allowing the fastening region to cool down.

6. The use according to claim 4 or 5, wherein the fastening further comprises:
before heating, temporarily fixing the fastening region (21) relative to at least the axial direction of the optical waveguide (10); and
after allowing it to cool down, releasing the fixing.

7. The use according to any one of claims 4 to 6,
wherein the predetermined period of time is at least so long that, at a given diameter, a given material thickness and a given extension of the fastening region in the axial direction, the material of the capillary (20) melts in the fastening region (21), and wherein the predetermined period of time is at most so long that the material of the optical waveguide (10) remains in the non-molten state

8. The use according to any one of claims 4 to 7,
wherein the predetermined period of time is at most so long that a region of the capillary (20) which surrounds the sensor region (11) of the optical waveguide remains in the non-molten state.

9. The use according to any one of claims 2 to 8,
wherein the fastening region (21) of the capillary (20) is provided circumferentially around an axis of the capillary (20), and wherein, after fastening, the fastening region (21) bears against the peripheral surface of the optical waveguide (10) in a circumferentially frictionally engaged and/or circumferentially sealing manner.

10. The use according to any one of claims 2 to 9,
wherein, after fastening, the fastening region of the capillary (20) has at least an axial extension suitable to withstand a predetermined force in the axial direction between the capillary (20) and the optical waveguide (10).

## Revendications

1. Dispositif de fixation (50), comprenant :
une zone d'insertion (51) pour un capillaire (20), qui entoure au moins partiellement une zone de capteur (11) d'un guide d'ondes optique (10), dans lequel le capillaire (20) comprend une zone de fixation (21) qui peut être disposée de manière espacée de la zone de capteur (11) du guide d'ondes optique (10) ;
un détecteur (52) configuré pour détecter une marque (22) sur le capillaire (20) prévue sur le capillaire (20) pour indiquer la zone de fixation (21) du capillaire (20) ;
une zone de chauffage (53) configurée pour chauffer, de préférence automatiquement, la zone de fixation (21) du capillaire (20) pendant une période de temps prédéterminée lorsque le détecteur (52) détecte le marquage (22).

2. Utilisation du dispositif de fixation (50) selon la revendication 1 pour réaliser un procédé de fixation comprenant :
la fourniture (1001) du guide d'onde optique (10) constitué d'un matériau ayant une première température de fusion, dans laquelle la zone de capteur (11) du guide d'onde optique comprend au moins un élément de capteur de température intégré (12) ;
la fourniture (1002) du capillaire (20) constitué d'un matériau ayant une seconde température de fusion, de sorte que le capillaire (20) entoure la zone de capteur (11) du guide d'ondes optique (10) au moins dans certaines zones et que la zone de fixation (21) du capillaire est espacé de la zone de capteur (11), dans laquelle la seconde température de fusion est inférieure à la première température de fusion, dans laquelle l'élément de capteur de température (12) est disposé dans une zone d'extrémité (13) du guide d'ondes optique et la zone d'extrémité est insérée dans le capillaire (20) de sorte qu'une extrémité (23) du capillaire (20) est exposée ;
la fixation (1003) de la zone de fixation du capillaire (20) au guide d'ondes optique (10), comprenant un chauffage de la zone de fixation du capillaire (20) à une température de chauffage qui est égale ou supérieure à la seconde température de fusion ;
le chauffage (1004) de l'extrémité (23) exposée du capillaire (20) à une température de chauffage qui est égale ou supérieure à la seconde température de fusion.

3. Utilisation selon la revendication 2, dans laquelle la température de chauffage est inférieure à la première température de fusion.

4. Utilisation selon la revendication 2 ou 3, dans laquelle la fixation comprend :
le chauffage de la zone de fixation (21) à la température de chauffage pendant une période de temps prédéterminée ; et
le fait de laisser refroidir la zone de fixation (21).

5. Utilisation selon la revendication 2, dans laquelle la fixation comprend :
le chauffage de la zone de fixation (21) à la température de chauffage, dans laquelle la température de chauffage est égale ou supérieure à la première température de fusion, pendant une période de temps prédéterminée, dans laquelle la période de temps prédéterminée est sélectionnée de sorte que le matériau du guide d'ondes optique (10) est chauffé pendant la fixation à une température inférieure à la première température de fusion ; et
le fait de laisser la zone de fixation refroidir.

6. Utilisation selon la revendication 4 ou 5, dans laquelle la fixation comprend en outre :
la fixation temporaire de la zone de fixation (21) par rapport au moins à la direction axiale du guide d'ondes optique (10) avant le chauffage ; et
le relâchement de la fixation après l'avoir laissé refroidir.

7. Utilisation selon l'une des revendications 4 à 6,
dans laquelle la période de temps prédéterminée est au moins suffisamment longue pour que le matériau du capillaire (20) fonde dans la zone de fixation (21) avec un diamètre donné, une épaisseur de matériau donnée et une extension donnée de la zone de fixation dans la direction axiale, et dans laquelle la période de temps prédéterminée est au maximum suffisamment longue pour que le matériau du guide d'onde optique (10) reste à l'état non fondu.

8. Utilisation selon l'une des revendications 4 à 7,
dans laquelle la période de temps prédéterminée est au plus suffisamment longue pour qu'une zone du capillaire (20), qui entoure la zone de capteur (11) du guide d'ondes optique, reste à l'état non fondu.

9. Utilisation selon l'une des revendications 2 à 8,
dans laquelle la zone de fixation (21) du capillaire (20) est disposée circonférentiellement autour d'un axe du capillaire (20), et dans laquelle, après fixation, la zone de fixation (21) vient en butée contre la surface circonférentielle du guide d'ondes optique (10) dans un mouvement de friction et/ou de manière étanche sur la circonférence.

10. Utilisation selon l'une des revendications 2 à 9,
dans laquelle la zone de fixation du capillaire (20) présente au moins une étendue axiale appropriée pour résister à une force prédéterminée dans la direction axiale entre le capillaire (20) et le guide d'ondes optique (10) après la fixation.
